# EUROPEAN PATENT SPECIFICATION

(11) **EP 2 630 932 B1**
(45) Date of publication and mention of the grant of the patent: **11.04.2018**
(21) Application number: 13156765.3
(22) Date of filing: 26.02.2013
(51) Int. Cl.: A61C 7/28, C22C 45/00, A61C 7/12

(54) **Metallic glass orthodontic appliances**
Orthodontische Metallglasvorrichtung
Appareils orthodontiques en verre métallique

(30) Priority: 27.02.2012 US 201261603674 P; 25.02.2013 US 201313775469
(43) Date of publication of application: 28.08.2013
(73) Proprietor: ORMCO CORPORATION, Orange, CA 92867 (US)
(72) Inventor: Sirney, Ronald James, Alta Loma, CA 91701 (US); Curley, Brandon, Arcadia, CA 91007 (US); Alauddin, Sammel Shahrier, Rancho Cucamonga, California 91730 (US)
(74) Representative: Findlay, Alice Rosemary

(56) References cited:
- EP-A1- 0 679 381
- EP-A1- 2 400 353
- JP-A- S5 479 996
- JP-A- 2011 183 440
- US-A- 5 322 435
- US-A1- 2008 135 138
- US-A1- 2009 321 037
- US-A1- 2009 325 120
- US-A1- 2010 178 629
- US-A1- 2011 162 795
- US-B1- 8 029 276

## Description

The present invention relates generally to orthodontic appliances, and more particularly to metallic orthodontic appliances.

Orthodontic treatment often involves attaching an appliance to the tooth. Forces applied to the appliance are then transferred to and thus move the tooth. As such, orthodontic appliances represent a principal component of corrective orthodontic treatment devoted to improving a patient's dentition. Orthodontic appliances may include brackets, archwires, or other devices.

Using the orthodontic bracket as an example, an orthodontist may affix orthodontic brackets to the patient's teeth with an adhesive and engage an archwire into a slot of each bracket. The archwire exerts flexural and/or torsional stresses on the orthodontic brackets to create restorative forces, including rotation, tipping, extrusion, intrusion, translation, and/or torque forces, tending to bring the teeth toward a desired position. Traditional ligatures, such as small elastomeric O-rings or fine metal wires, may be employed to retain the archwire within each bracket slot. Due to difficulties encountered in applying an individual ligature to each bracket, self-ligating orthodontic brackets have been developed that eliminate the need for ligatures by relying on a movable portion or member, such as a latch, clip, or slide, for retaining the archwire within the bracket slot.

In a typical sequence of orthodontic treatment, a small diameter round metallic archwire is used for preliminary tooth movement, followed by the use of rectangular metallic archwires at the later stages of treatment. The final stage may involve the use of an archwire of rectangular cross-section which fills the slot in the bracket. For example, a small (e.g., 0.356 mm (0.014 inch)) round archwire may be used initially and a rectangular cross-sectioned (e.g., 0.533 by 0.635 mm ( 0.021 inch by 0.025 inch)) archwire may be introduced when torque is required to precisely orient the teeth, usually at or near the end of treatment. Since its rectangular shape renders it non-rotatable with respect to each bracket, the archwire imposes torquing or uprighting forces on the teeth. As a result, the rectangular wire may be slightly twisted between adjacent teeth. Other archwires of different sizes may be introduced during intermediate stages of treatment. Although metallic archwires are effective, they tend to notch when in contact with or when bent around the corresponding bracket.
Traditionally most orthodontic treatment is performed by attaching one or more appliances to the labial surface of a tooth. However, treatment methods in which the orthodontic appliance is secured to the lingual surface of the tooth are known. Lingual treatment has an advantage in that the orthodontic appliance is not as readily observed, and, in this sense, lingual treatment or lingual systems are considered to be more aesthetic than the corresponding labial treatment. Lingual treatment is not, however, without its problems and challenges for both the patient and for the clinician. These problems include accessibility for the clinician and comfort for the patient.

Various materials dominate the orthodontic bracket market because of their characteristic combination of strength, toughness, aesthetics, biological/corrosion resistance, and manufacturability. Stainless steel (SS) has historically succeeded as the primary bulk material used for brackets and other appliances mainly due to stainless steel's acceptance in the marketplace as best balancing the aforementioned characteristics. Stainless steel has the necessary strength, toughness, and oral corrosion resistance to satisfy the needs of most clinical cases. It is also weldable, easy to process, and is polishable for acceptable aesthetic appeal.

Alternate materials have been discovered that improve one of the aforementioned characteristics relative to stainless steel and also address sensitivity issues associated with the presence of nickel in stainless steel. These materials include alumina, zirconia, polycarbonate, titanium, and various composites. However, each of these materials sacrifices one performance aspect or characteristic for improvement in another characteristic, resulting in a tradeoff that must be taken into consideration in each clinical case.

Ultimately, the necessary tradeoff in characteristics relative to stainless steel suggests that there is no clear unifying material among the current generation of those available. For example, monocrystalline and polycrystalline alumina have improved aesthetics and yield strength for use in bracket materials. Yet, the drawback with alumina is that it is a brittle material. It exhibits significantly limited fracture toughness as compared to stainless steel.

To address the brittle nature of ceramic brackets generally, some ceramic brackets even contain metallic components. These so-called hybrid brackets may include a metallic liner in the archwire slot or may utilize a closure member (e.g., ligating slide) made out of metal for a self-ligating bracket. As such, hybrid appliances are not fully aesthetic and are not as tough as their all-metallic counterparts. Again, this combination of materials results in a tradeoff in characteristics. Furthermore, ceramic appliances are difficult and costly to manufacture.

Other materials have similar compromising properties. For example, polycarbonate brackets have improved aesthetics, debonding characteristics, and toughness but lack strength (torque deformation) and often discolor during use. And, by way of additional example, titanium brackets offer a definitive nickel free, higher strength alternative to stainless steel, but they also discolor during use, require more expensive raw materials, and can be difficult and costly to manufacture.

Consequently, there is a need for improved orthodontic appliances that overcome these and other deficiencies.

EP 0679381 discloses an orthodontic appliance made of an amorphous alloy which may have a supercooling liquid region.

The invention is defined by the claims.

The invention will now be further described by way of example with reference to the accompanying drawings, in which:
Fig. 1 is a transformation-temperature-time diagram for a metallic material;
Fig. 2A is a perspective view of a self-ligating orthodontic bracket in accordance with one embodiment of the invention, with a ligating latch shown in a closed position;
Fig. 2B is a side elevation view of the self-ligating orthodontic bracket shown in Fig. 2A with the ligating latch shown in an opened position;
Fig. 3 is a perspective view of an orthodontic bracket in accordance with one embodiment of the invention;
Fig. 4 is a side elevation view of the orthodontic bracket shown in Fig. 3;
Fig. 5 is a perspective view of a self-ligating orthodontic bracket in accordance with one embodiment of the invention, with a ligating slide shown in the closed position;
Fig. 6 is a perspective view of the self-ligating orthodontic bracket of Fig. 5, with the ligating slide shown in the opened position;
Fig. 7 is a perspective view of a bracket body of the self-ligating orthodontic bracket shown in Fig. 5, according to one embodiment of the invention;
Fig. 8 is a perspective view of a ligating slide of the self-ligating orthodontic bracket shown in Fig. 5, according to one embodiment of the invention;
Fig. 9 is a cross-sectional view of the self-ligating orthodontic bracket shown in Fig. 5 taken along section line 9-9;
Fig. 10 is a cross-sectional view of the self-ligating orthodontic bracket shown in Fig. 5 with the ligating slide shown between the opened position and the closed position;
Fig. 11 is a cross-sectional view of the self-ligating orthodontic bracket shown in Fig. 6 taken along section line 11-11;
Fig. 12 is a perspective view of an archwire in accordance with one embodiment of the invention;
Fig. 13 is a plan view of the archwire shown in Fig. 12;
Fig. 14 is a cross-sectional view of one embodiment of the archwire of Fig. 12 taken along section line 14-14; and
Fig. 15 is a side elevation view of an orthodontic appliance in accordance with one embodiment of the invention in the form of a pair of orthodontic pliers.

An orthodontic appliance according to embodiments of the present invention is made of a metallic glass.

When referring to embodiments of the invention, the wording "metallic glass" is limited to Nickel based alloy metallic glass.

As used herein, an orthodontic appliance refers to components used in orthodontic treatment. By way of example, orthodontic appliances include, but are not limited to, orthodontic brackets, archwires, other appliances that may be attached or secured directly or indirectly to a tooth, or tools used in orthodontic treatment.

As referred to herein, "metallic glass," means a metal or metal alloy that is amorphous or that lacks long-range atomic order, though there may be some atomic order over short distances, such as, a few bond lengths (i.e., 3 or 4 bond lengths). A metallic glass is not a crystalline or a polycrystalline material. By contrast, a crystalline or a polycrystalline material contains an ordered arrangement of atoms such that it may be characterized as having well-defined x-ray diffraction peaks, which are generally absent from an x-ray diffraction pattern of a metallic glass. By way of further contrast, there may be few, if any, grain boundaries in a metallic glass. Accordingly, in one embodiment, the orthodontic appliance of metallic glass does not contain grain boundaries. As used herein, "made of" means that the entire volume defined by a boundary surface of the orthodontic appliance or a discrete component thereof is a metallic glass. The orthodontic appliance or the discrete component thereof thus predominantly exhibits the properties associated of the metallic glass. In one embodiment, the orthodontic appliance or component thereof made of a metallic glass is nearly 100% metallic glass with impurity content of other elements from the raw materials, the fabrication process, and/or insignificant crystal formation being contemplated.

As is set out in detail below, it has been discovered that an orthodontic appliance made of metallic glass may be made smaller and/or made with specific features so as to provide the same or improved strength, toughness, and corrosion resistance compared to orthodontic brackets of stainless steel or ceramic. Advantageously, the smaller size or specific features may improve the aesthetic appeal of the orthodontic appliance when compared to the relatively larger stainless steel or titanium alloy appliances. Furthermore, orthodontic appliances of metallic glass may be characterized as having at least equivalent manufacturability to that of stainless steel. However, in certain circumstances, as set out below, metallic glass orthodontic appliances may be more easily manufactured.

To these and other ends, metallic glasses may be formed by heating a metal composition or an alloy composition and then rapidly cooling the metal or alloy at or above a rate sufficient to avoid crystallization or long range ordering of the metal atoms. Heating the metal or alloy may include heating to temperatures above the melting temperature of the metal or alloy. But, heating to lower temperatures, as set out below, may also be utilized to form components from metallic glass.

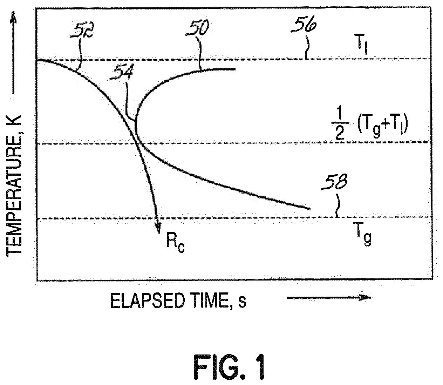

The cooling rate necessary to form or to retain a metal or alloy in an amorphous structure is referred to as the "critical cooling rate" (labeled Rc in Fig. 1 and indicated by numeral 52) and may depend on the composition of the metal or alloy. Cooling the molten metal or alloy at a rate equal to or greater than the critical cooling rate Rc to a sufficiently low temperature, such as room temperature, generally avoids crystallization and results in a metallic glass. By way of example, the critical cooling rate may on the order of a few Kelvin per second (K per s), for example, around 10 K per s, but may exceed 10³ K per s and, by way of additional example, may exceed 10⁶ K per s.

The critical cooling rate Rc depends on the composition of the metal or alloy. In this regard, the composition of the molten metal or the molten alloy may determine the shape and location of a transformation curve 50 for the composition in a Time-Temperature-Transformation (TTT) diagram. An exemplary TTT diagram is shown in Fig. 1. With reference to the transformation curve 50 of a given metal or alloy, the critical cooling rate Rc of the molten metal or the molten alloy is the minimum cooling rate that avoids the crystallization "nose" at 54 of the transformation curve 50 in the TTT diagram. In other words, cooling the molten metal or molten alloy from a temperature at which the metal or alloy is molten or slightly viscous to a lower temperature at which the metal or alloy is a solid at a rate that avoids the nose 54 results in a metallic glass. This cooling path is generally indicated by curve 52.

Other factors that influence the glass-forming ability (i.e., the shape and the location of a transformation curve in TTT diagram) of a molten metal or a molten alloy may include the stability of the molten metal or molten alloy at elevated temperatures, the stability of the metallic glass at the temperature at which the metallic glass is to be used after cooling, and the kinetic stability of the competing crystalline phases once the molten metal or the molten alloy is cooled, to name only a few. It will be appreciated that metals and alloys exhibiting a relatively low critical cooling rate are generally more adaptable to making products having larger volumes. These alloy compositions may be referred to as "bulk metallic glasses" or BMGs.

Numerous metallic alloys have been developed that may exhibit a relatively reduced critical cooling rate and may be referred to as BMGs. Exemplary alloys are disclosed in U.S. Patent Nos. 5,288,344; 5,368,659; 5,618,359; and 5,735,975. By way of specific example, embodiments of the present invention may include one or more metallic glasses of zirconium (Zr) and/or titanium (Ti) containing alloys. For example, the metallic glass may be a metallic alloy that is Zr based with minor additions of other elements, such as, transition elements (i.e., Groups 3-12 of the Periodic Table). By way of additional example, other metallic glasses may be iron (Fe) based, Ti based, palladium (Pd) based, or nickel (Ni) based. It will be appreciated that these metallic alloys may also include minor additions of other elements. Pd-based and Ni-based metallic glasses are known as "GlassiPalladium" and "GlassiNickel," respectively, in the industry and are owned and manufactured by Glassimetal Technology Inc. of Pasadena, California.

According to embodiments of the present invention, and as set out above, the transformation curve 50 of an alloy may influence the forming process by which an orthodontic appliance or a portion thereof may be made of a nickel based metallic glass. Generally, the lower the critical cooling rate Rc, the more practicable it is to manufacture an orthodontic appliance. Further, techniques to manufacture orthodontic appliances may also depend on the appliance itself. For example, the method for manufacturing a metallic glass archwire may be different from the method for manufacturing a metallic glass orthodontic bracket.

In this regard, and in one embodiment, the method includes melting the metal or alloy composition at an elevated temperature and then cooling the molten composition to a lower temperature at a rate that is sufficient to avoid crystallization. Cooling may be achieved in a mold such that, once cooled, the orthodontic appliance is formed. Methods for manufacturing the orthodontic appliance include, but are not limited to, metal casting, such as, die casting and investment casting. In particular, one of the casting processes practiced by Liquid Metal Technologies of Rancho Santa Margarita, California, is suitable for manufacturing a metallic glass orthodontic appliance.

Other exemplary processes include heating a previously prepared metallic glass ingot, metallic glass bulk chunklet, or other bulk form of metallic glass to an elevated temperature and then forging or plastic forming the heated bulk form. Heating rates of 200 K per s or more may be achieved through capacitive discharge. One exemplary forming process is described in U.S. Publication No. 2009/0236017 titled "Forming of Metallic Glass by Rapid Capacitor Discharge,". According to embodiments of the present invention, the metallic glass may be heated to an elevated temperature at which the viscosity of the metallic glass is reduced from that observed at room temperature. Generally, the viscosity of metallic glass at room temperature is that of a solid material, that is, at least 10¹² to 10¹³ Pascal seconds (Pa·s), for example.

In particular, and in one embodiment, elevated temperatures sufficient to reduce the viscosity may include temperatures that are substantially less than the melting temperature 56 (Tₗ) of the metal or the alloy, and, for example, may include temperatures that are less than a crystallization temperature at which the metallic glass spontaneously crystallizes. By way of additional example, elevated temperatures may include temperatures up to and including those temperatures that are slightly above a glass transition temperature (T_{g}) 58, which corresponds to a temperature at the intersection between the curve for the metallic glass in a temperature versus volume plot (not shown) and the curve for super-cooled liquid of the metal or the alloy in the temperature versus volume plot.

In one embodiment, the viscosity of the metallic glass at elevated temperatures may range from about 10 Pa·s to about 10⁹ Pa·s. In another embodiment, the bulk form of metallic glass may be heated to a temperature at which the viscosity is in the range of from about 10³ Pa·s to about 106 Pa·s prior to forming. At these reduced viscosities relative to the solid form, the bulk form of a metallic glass may be formable into the orthodontic appliance or a portion thereof while the metallic glass is stable enough to eliminate or limit the possibility of crystallization during forming.

It will be appreciated that the elevated temperature and corresponding viscosity at which forming occurs may depend on the metallic glass composition. Again, the elevated temperature may depend on the shape of the transformation curve 50. Further, it will be appreciated that the maximum elevated temperature to which the bulk metallic glass form may be heated before crystallization occurs may also depend on the heating rate. Slower heating rates may generally result in comparatively lower maximum forming temperatures and tighter available process windows. In contrast, relatively high heating rates may allow heating of the bulk form of the metallic glass to a temperature that is at or slightly below a crystallization temperature, though at least significant crystallization is avoided and, preferably, no crystals form.

In embodiments of the invention, forming may include net shape or near net shape techniques. Net shape and near net shape techniques include those by which forming produces a component at or near its final dimensions in the absence of, or with very limited, post formation processing (e.g., grinding and/or polishing). Advantageously, manufacturing orthodontic appliances according to embodiments of the present invention is simplified relative to other processes for producing orthodontic appliances because there may be fewer process steps needed during production. In this regard, it will be appreciated that embodiments of the present invention reduce production costs.

Once the orthodontic appliance is formed and before crystallization occurs or begins, the orthodontic appliance may be cooled to room temperature. The processing time for heating the bulk form of the metallic glass, forming, and cooling may be minimal. For example, processing time may be less than 1 second, and will more likely be measured in fractions of a second. In one embodiment, processing time measures a few (less than 10) microseconds.

As is set out above, embodiments of the present invention may require little, if any, after-formation processing because the formed components exhibit little or no shrinkage during or after formation. Thus, after forming the orthodontic appliance of a metallic glass, subsequent machining and/or finishing operations, such as tumbling, may not be required. In addition, because shrinkage is minimal, an orthodontic appliance or a discrete component thereof may be made or formed to tolerances of about one-half of the tolerance associated with MIM. By way of example, and not limitation, the tolerance of an orthodontic appliance or discrete component thereof may be about 0,0127 mm ( 0.0005 of an inch) or less, for example, about 0,00762 mm ( 0.0003 of an inch to about 0,00254 mm ( 0.0001 of an inch). With the capability of producing reduced tolerances, orthodontic appliances and discrete components thereof (e.g., a movable member) made of a metallic glass according to embodiments of the invention may exhibit improved capabilities. For example, in embodiments in which a self-ligating bracket or a discrete component thereof (i.e., movable member) is made of a metallic glass, reduced tolerances may improve rotational control of the tooth to which the bracket is attached.

In contrast with MIM and similar processes, manufacturing orthodontic appliances, as set forth above, does not require a binder. As is known, MIM produces a green body that includes an organic binder. The organic binder must be removed and the body sintered to form the product. The MIM process produces significant shrinkage from the green body to the final product. The mold designer must account for the shrinkage associated with the process. As a consequence, the MIM process has poor tolerance control, for example, greater than 0,0127 mm (0.0005 of an inch). To correct for the limited capability of MIM in this regard, it may be necessary to perform subsequent machining processes on the component to bring the component to within predetermined tolerance limits.

According to embodiments of the present invention, orthodontic appliances made of metallic glass may exhibit superior performance relative to equivalent appliances made of stainless steel or titanium alloys. While the properties of the metallic glass may vary by composition, metallic glasses are known to have yield strengths from about 1500 MPa to about 2500 MPa due to a unique fracture mechanism known as shear banding. These yield strengths represent from about a 50% improvement to about a 400% improvement over some stainless steels, like 17-4, and over some Ti alloys, like Ti6Al4V. In addition, hardness of metallic glasses ranges from about 500 kg per mm² to about 700 kg per mm². This relative improvement over crystalline metals is likely due to the densely packed amorphous arrangement of the atoms. Similarly, fracture toughness generally falls within the range from about 75 MPa√m to about 200 MPa√m. The combination of properties may be referred to conceptually as "damage tolerance."

Metallic glasses have a relatively high damage tolerance as compared to other engineering materials, such as those commonly used in orthodontics, for example, stainless steel, Ni-based, and Ti-based alloys. In addition to the relative improvement in damage tolerance over many engineering materials, metallic glasses exhibit improved corrosion resistance. This may be due to the rapid processing, as set out above, which may ensure greater chemical homogeneity, a lack of significant crystallization, and improved surface finish. It will be appreciated that crystalline inclusions and/or surface defects are likely to act as sites for corrosion. A metallic glass orthodontic appliance may lack significant crystals, and with regard to surface finish, as set out above, metallic glass orthodontic appliances may not require subsequent surface treatment or finishing, such as, grinding and polishing, because the as-formed surface finish may be smooth and glossy. In other words, the as-formed surface of the orthodontic appliance may be nearly defect-free. Thus, metallic glass orthodontic appliances according to embodiments of the invention are less likely to corrode during use.

It has been discovered that metallic glass orthodontic appliances have other benefits. In this regard, to address the aesthetic aspect of treatment, the size of metallic glass orthodontic appliances may be reduced compared to conventional orthodontic appliances. In general, an orthodontic appliance, such as, an orthodontic bracket or archwire, made of a metallic glass is more difficult to see during treatment. However, these appliances may provide the same or improved performance because of the improved properties relative to conventional materials, as set out above.

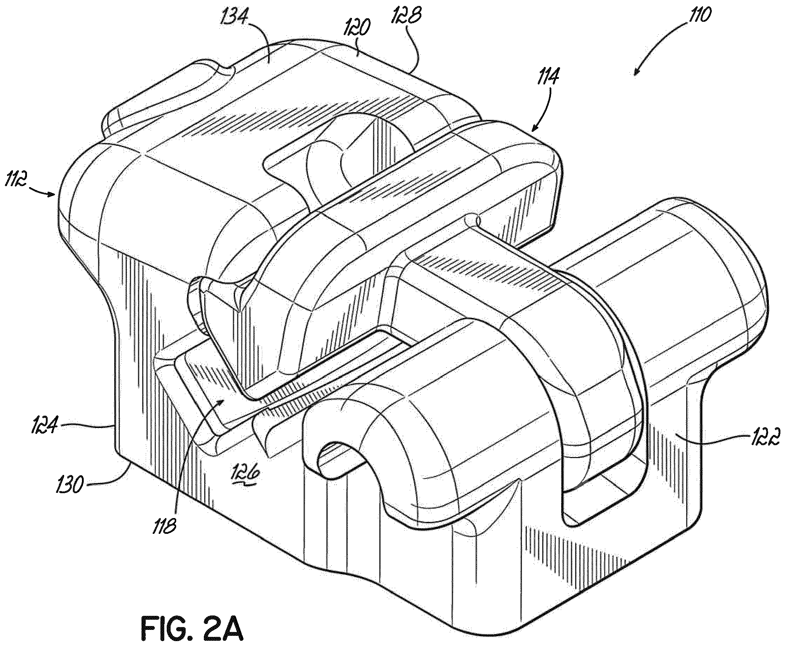

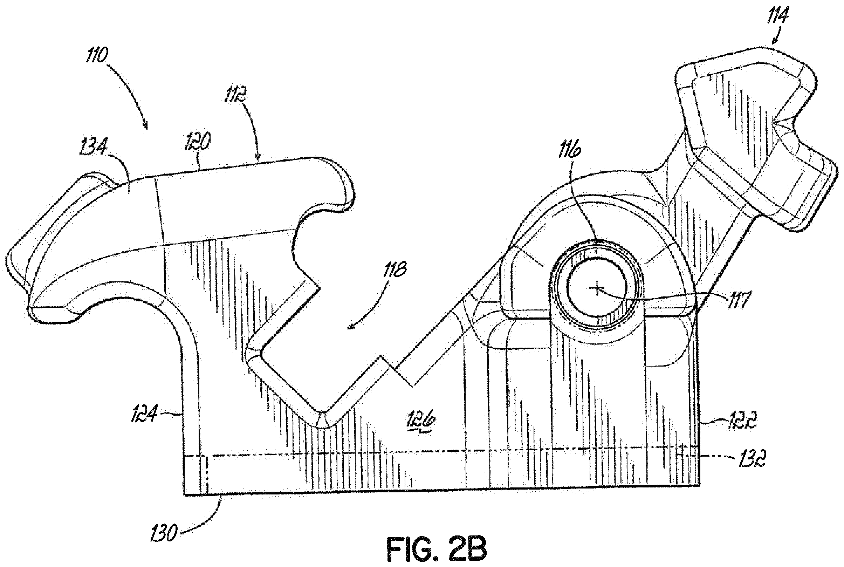

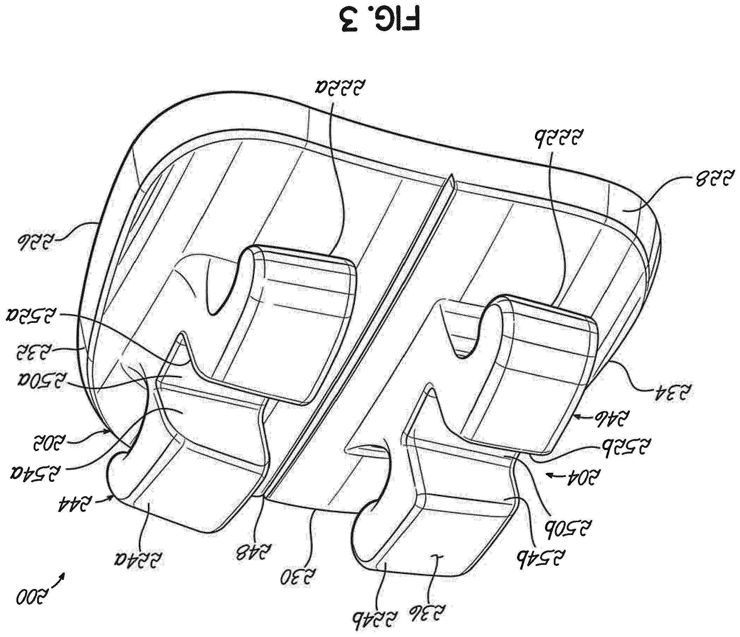

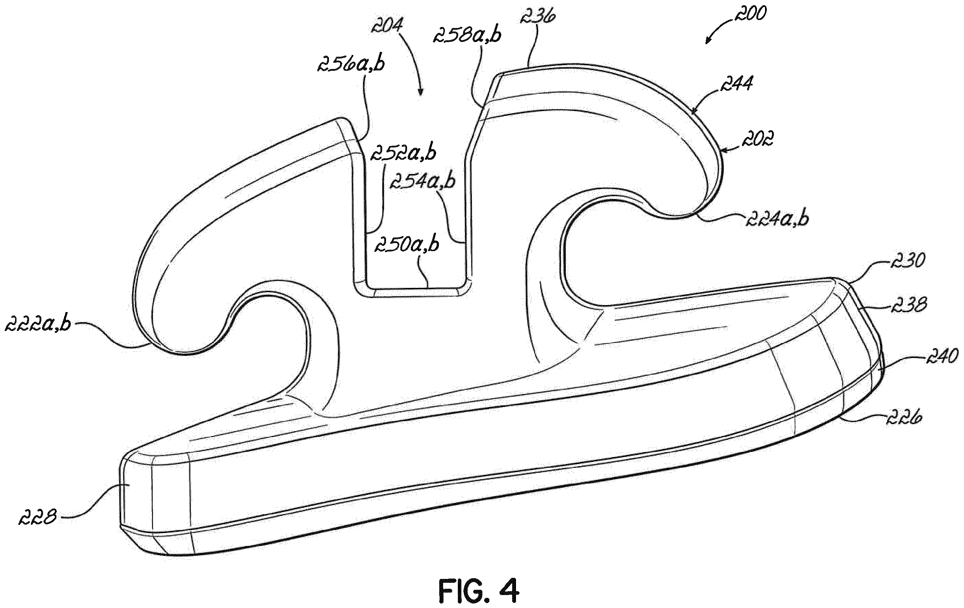

Referring to the figures generally, and to Figs. 2A and 2B specifically, an exemplary orthodontic bracket according to one embodiment of the invention is shown. The bracket is more fully described in U.S. Patent Application No. 13/224,908 titled "Self-ligating Orthodontic Appliance". As shown, a self-ligating orthodontic bracket 110 includes a bracket body 112 and a movable member or movable ligating latch 114 operably coupled to the bracket body 112 by a resilient hinge pin 116 (shown in Fig. 2B). According to embodiments of the invention, the bracket body 112, the movable ligating latch 114, and/or the resilient hinge pin 116 may be made of metallic glass. In other words, the entirety of the body 112, the latch 114, or the pin 116 may be metallic glass. It will be appreciated that while a self-ligating bracket is shown and described, orthodontic brackets that are not self-ligating may be made of a metallic glass, such as the orthodontic bracket disclosed with reference to Figs. 3 and 4, below.

The orthodontic bracket 110 is configured for use in corrective orthodontic treatments. To that end, the bracket body 112 includes an archwire slot 118 formed therein that is adapted to receive an archwire (not shown) for applying corrective forces to the teeth. The ligating latch 114 is movable between a closed position (Fig. 2A) in which the ligating latch 114 retains the archwire within the archwire slot 118 and an opened position (Fig. 2B) in which the archwire is insertable into the archwire slot 118. The movement of the latch 114 from the closed position to the opened position may require a combination of rotational motion around an axis of rotation 117 determined by the hinge pin 116 and relative translational motion between the latch 114 and the bracket body 112.

The orthodontic bracket 110 may be secured to either the labial or lingual surface of the tooth. However, unless otherwise indicated, the bracket 110 is described herein using a reference frame attached to a lingual surface of a tooth on the upper or lower jaw. Consequently, terms such as labial, lingual, mesial, distal, occlusal, and gingival used to describe the orthodontic bracket 110 are relative to the chosen reference frame. The embodiments of the invention, however, are not limited to the chosen reference frame and descriptive terms, as the orthodontic bracket 110 may be used on other teeth and in other orientations within the oral cavity. For example, the orthodontic bracket 110 may also be coupled to the labial surface of the tooth. Those of ordinary skill in the art will recognize that the descriptive terms used herein may not directly apply when there is a change in reference frame. Nevertheless, the embodiments of the invention are intended to be independent of location and orientation within the oral cavity and the relative terms used to describe embodiments of the orthodontic bracket are to merely provide a clear description of the embodiments in the drawings. As such, the relative terms labial, lingual, mesial, distal, occlusal, and gingival are in no way limiting embodiments of the invention to a particular location or orientation.

One embodiment of the orthodontic bracket 110 is particularly configured for use on the lingual surface of an anterior tooth on the upper jaw. In this regard, the overall shape and profile of the orthodontic bracket 110 may generally correspond to the shape of anterior teeth on the upper jaw. When mounted to the lingual surface of an anterior tooth carried on the patient's upper jaw, the bracket body 112 has a lingual side 120, an occlusal side 122, a gingival side 124, a mesial side 126, a distal side 128, and a labial side 130. The labial side 130 of the bracket body 112 is configured to be secured to the tooth in any conventional manner, such as, by an appropriate orthodontic cement or adhesive or by a band around an adjacent tooth.

In the illustrated arrangement, the labial side 130 may include a shaped projection 132 (shown in phantom line in Fig. 2B) configured for insertion and coupling with a corresponding receptacle formed on a pad (not shown) defining a bonding base that is secured to the surface of the tooth. The pad may be coupled to the bracket body 112 as a separate piece or element (e.g., by laser or other conventional welding processes), and may be specially formed for a particular patient. For example, the pad may be customized to fit the surface of a particular patient's tooth while positioning the archwire slot relative to the tooth surface. In this regard, impressions of the patient's tooth are obtained and are then scanned or digitized for manipulation with a computer. With computer manipulated data of the patient's tooth, a pad is manufactured such that the surface thereof mates with that tooth. In one embodiment, the pad may be made of a metallic glass. It will be appreciated that the shaped projection 132 may define a generally trapezoidal shape to fit within a similarly shaped recess in the custom manufactured pad.

The bracket body 112 may further include a gingival tie wing 134 extending in a gingival direction at the lingual side 120. The bracket body 112 may also include a pair of occlusal tie wings (not shown) extending in an occlusal direction at the lingual side 120.

In one embodiment, the overall volume of the bracket body 112 may be reduced relative to a similarly configured stainless steel bracket body though the smaller metallic glass bracket body 112 may maintain or improve the function of the orthodontic bracket 110. Furthermore, the overall volume of the latch 114 may be similarly reduced relative to a similarly configured stainless steel latch. The smaller volume of the orthodontic bracket 110 may facilitate greater acceptance of metallic appliances in orthodontic treatment generally, but particularly in lingual treatment.

In one embodiment, the reduced volume may include a reduction in the overall height, the overall width, and/or the length dimension of the bracket body 112 and/or the latch 114. By way of example, the overall height, as is generally measured from the lingual side 120 to the labial side 130, may be at least about 10% less and may be from about 10% to about 80% less than a comparable body made of stainless steel and may be from about 25% to about 80% less than a comparable body made of ceramic or plastic. Similarly, the length dimension of the bracket body 112, which is measured generally from the occlusal side 122 to the gingival side 124 may be similarly less than a comparable body made of stainless steel. For example, the length dimension may be at least about 10% less and may be from about 10% to about 80% less. The overall width, which is measured generally from the mesial side 126 to the distal side 128, may be similarly smaller. In addition or alternatively, the tie wing 134 or other features of the bracket body 112 may be reduced in size. Thus, individual features of the bracket body 112 may be made finer though without change in their respective function. It will be appreciated that other features may be added to the orthodontic bracket 110 that were not possible with stainless steel. In addition, it will be appreciated that the performance of the orthodontic bracket 110 may be the same or improved over comparatively larger stainless steel and titanium brackets.

An alternative orthodontic bracket is shown in Figs. 3 and 4. In one embodiment the orthodontic bracket 200 comprises a body 202 made of a metallic glass. In other words, the entirety of the body 202 may be a metallic glass. The body 202 has an archwire slot 204 which is configured to receive an archwire (not shown) for applying corrective forces to the tooth. In addition, the body 202 has a pair of occlusal tie wings 222a, 222b opposing a pair of gingival tie wings 224a, 224b respectively, for receiving one or more ligatures (not shown), as is known in the art.

The orthodontic bracket 200, unless otherwise indicated, is described herein using a reference frame with the bracket 200 attached to a labial surface of a tooth on the upper jaw. Consequently, as used herein, terms such as labial, lingual, mesial, distal, occlusal, and gingival used to describe bracket 200 are relative to the chosen reference frame. The embodiments of the invention, however, are not limited to the chosen reference frame and descriptive terms, as the orthodontic bracket 200 may be used on other teeth and in other orientations within the oral cavity. For example, the bracket 200 may also be located on the lower jaw or mandible or on the lingual surface of a tooth. Those of ordinary skill in the art will recognize that the descriptive terms used herein may not directly apply when there is a change in reference frame. Nevertheless, the invention is intended to be independent of location and orientation within the oral cavity and the relative terms used to describe embodiments of the orthodontic bracket are to merely provide a clear description of the examples in the drawings. As such, the relative terms labial, lingual, mesial, distal, occlusal, and gingival are in no way limiting the invention to a particular location or orientation.

When the bracket 200 is mounted to the labial surface of a tooth carried on the patient's upper jaw, the body 202 has a lingual side 226, an occlusal side 228, a gingival side 230, a mesial side 232, a distal side 234, and a labial side 236. The lingual side 226 of the body 202 is configured to be secured to the tooth in any conventional manner, for example, by an appropriate orthodontic cement or adhesive or by a band around an adjacent tooth (not shown). The archwire slot 204 extends in a mesial-distal direction from mesial side 232 to distal side 234. The archwire slot 204 of the body 202 may be configured to receive an orthodontic archwire in any suitable manner.

As shown best in Fig. 4, the lingual side 226 may further be provided with a pad 238 that defines a bonding base 240 adapted to be secured to the surface of the tooth. The pad 238 may be integrally formed with the body 202 or be of a separate element coupled to the body 202 (not shown). The bonding base 240 may include a plurality of pegs or posts (not shown) thereon for improving bond strength with an adjacent tooth.

With reference to Fig. 3, in one embodiment, the body 202 includes a mesial portion 244 and a distal portion 246, which may be separated by a recess 248. In the exemplary embodiment shown, the mesial portion 244 includes the occlusal tie wing 222a and gingival tie wing 224a and the distal portion 246 includes occlusal tie wing 222b and gingival tie wing 224b.

Additionally, each portion 244, 246 may define a corresponding portion of the archwire slot 204. In this regard, for example, the mesial portion 244 may define a base surface 250a and a pair of opposed slot surfaces 252a, 254a projecting labially from the base surface 250a that collectively define the archwire slot 204 in the mesial portion 244. The distal portion 246 may define a base surface 250b and a pair of opposed slot surfaces 252b, 254b projecting labially from the base surface 250b that collectively define the archwire slot 204 in the distal portion 246.

In one embodiment, and as shown in Fig. 4, the mesial portion 244 and distal portion 246 may further define chamfers 256a, 256b and 258a, 258b, respectively. The chamfers 256a, 256b may intersect and extend from corresponding slot surfaces 252a and 252b and may form an angle relative to the respective slot surface 252a, 252b. Similarly, in one embodiment, the chamfers 258a, 258b intersect and extend from corresponding slot surfaces 254a and 254b and may form an angle relative to the respective slot surface 254a, 254b. Advantageously, the chamfers 256a, 256b, 258a, and 258b form a funnel-like guide near the archwire slot 204 that eases insertion of an archwire therein by providing a larger target for the clinician.

Similar to the self-ligating bracket 110 shown in Figs. 2A and 2B, in one embodiment, the overall volume of the orthodontic bracket 200 may be reduced relative to a similarly configured stainless steel bracket body though the smaller metallic glass bracket body 202 may maintain or improve the function of the orthodontic bracket 200. The smaller volume of the orthodontic bracket 200 may facilitate greater acceptance of metallic appliances in orthodontic treatment generally, but particularly in lingual treatment. Individual features, such as any single one or more of the tie wings 222a, 222b, 224a, and 224b, may be reduced in size, for example, reduced in thickness yet retain sufficient strength necessary to efficiently move teeth during orthodontic treatment.

These reductions may entail a reduction in the overall height, the overall width, and/or the length dimension of the bracket body 202. As a result, the volume of the bracket body 202 may be reduced. By way of example, the overall height, as is generally measured from the lingual side 226 to the labial side 236, may be at least about 10% less and may be from about 10% to about 80% less than a comparable body made of stainless steel and may be from about 25% to about 80% less than a comparable body made of ceramic or plastic. Similarly, the length dimension of the bracket body 202, which is measured generally from the occlusal side 228 to the gingival side 230 may be similarly less than a comparable body made of stainless steel. For example, the length dimension may be at least about 10% less and may be from about 10% to about 80% less. The overall width, which is measured generally from the mesial side 232 to the distal side 234, may be similarly smaller. In addition or alternatively, other features of the bracket body 202 may be reduced in size. Thus, individual features of the bracket body 202 may be made finer though without change in their function. It will be appreciated that other features may be added to the orthodontic bracket 200 that are not possible in a stainless steel orthodontic bracket. In addition, it will be appreciated that the performance of the orthodontic bracket 200 may be the same or improved over comparatively larger stainless steel and titanium brackets.

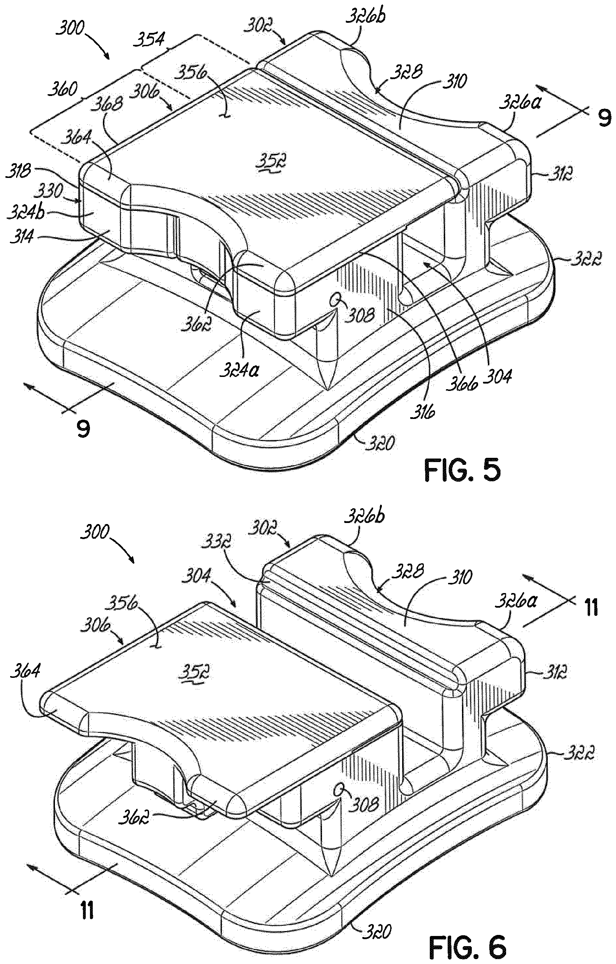

In another embodiment of an orthodontic appliance, as shown in Fig. 5, a self-ligating orthodontic bracket 300 comprises a body 302 made of a metallic glass. In other words, the entirety of the body 302 may be a metallic glass. The bracket 300 may be made by one of the methods described herein. The body 302 has an archwire slot 304 that is configured to receive an archwire (not shown) for applying corrective forces to the tooth. The self-ligating orthodontic bracket 300 includes a movable member or movable ligating slide 306 operably coupled to the bracket body 302 by a resilient pin 308. According to embodiments of the invention, the bracket body 302, the movable ligating slide 306, and/or the resilient pin 308 may be made of metallic glass. Alternatively, the resilient pin 308 may be a superelastic material, such as, nitinol; stainless steel; or another alloy.

The ligating slide 306 is movable between a closed position (Fig. 5) in which the ligating slide 306 retains the archwire within the archwire slot 304 and an opened position (Fig. 6) in which the archwire is insertable into the archwire slot 304. The movement of the slide 304 from the closed position to the opened position may require relative translational motion between the slide 306 and the bracket body 302.

The orthodontic bracket 300 may be secured to either the labial or lingual surface of the tooth. However, unless otherwise indicated, the bracket 300 is described herein using a reference frame attached to a labial surface of a tooth on the upper or lower jaw. However, the orthodontic bracket 300 may also be coupled to the lingual surface of the tooth. Those of ordinary skill in the art will recognize that the descriptive terms used herein may not directly apply when there is a change in reference frame. Nevertheless, the embodiments of the invention are intended to be independent of location and orientation within the oral cavity and the relative terms used to describe embodiments of the orthodontic bracket are to merely provide a clear description of the embodiments in the drawings. As such, the relative terms labial, lingual, mesial, distal, occlusal, and gingival are in no way limiting embodiments of the invention to a particular location or orientation.

When positioned on the labial surface of an anterior tooth on the upper jaw, the bracket body 302 has a labial side 310, an occlusal side 312, a gingival side 314, a mesial side 316, a distal side 318, and a lingual side 320. The lingual side 320 of the bracket body 302 is configured to be secured to the tooth in any conventional manner, such as, by an appropriate orthodontic cement or adhesive or by a band around an adjacent tooth.

In the illustrated arrangement, the lingual side 320 may include a pad 322 defining a bonding base that is secured to the surface of the tooth. The pad 322 may be coupled to the bracket body 302 as a separate piece or element (e.g., by laser or other conventional welding processes), and may be specially formed for a particular patient. For example, the pad 322 may be customized to fit the surface of a particular patient's tooth while positioning the archwire slot relative to the tooth surface. In one embodiment, only the pad 322 may be made of a metallic glass.

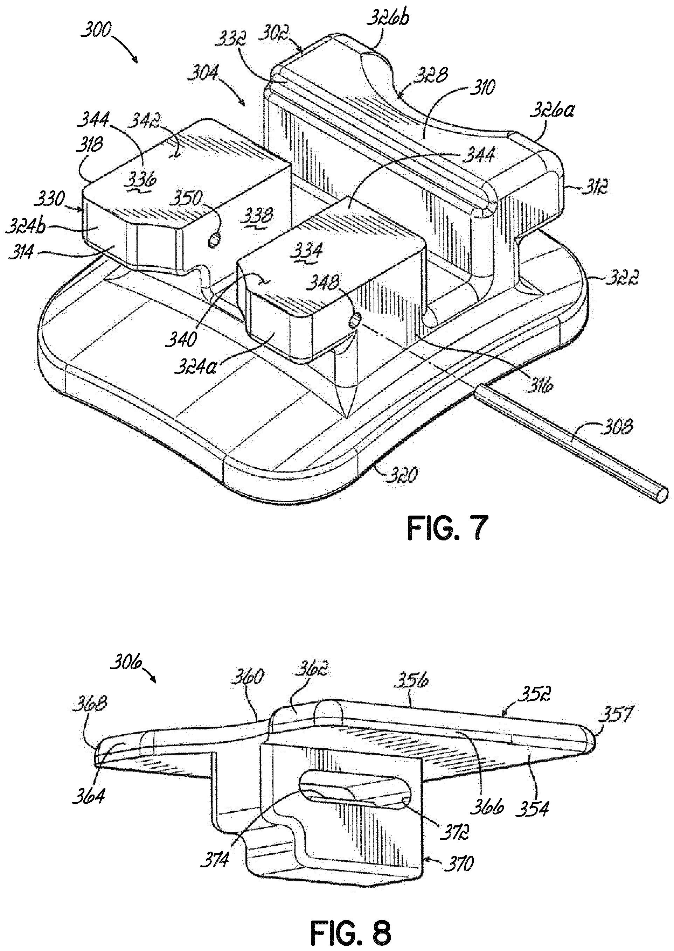

In one embodiment, and with reference to Fig. 7, the bracket body 302 includes an occlusal portion 328 and a gingival portion 330 opposing the occlusal portion 328 and separated by the archwire slot 304. The occlusal portion 328 includes a ledge 332 adjacent the archwire slot 304. As shown, the ledge 332 extends the full width of the occlusal portion 328 and is configured to receive a portion of the slide 306 (shown in Fig. 5) when the slide 306 is in the closed position. In one embodiment, the bracket body 302 may also include a pair of occlusal tie wings 326a, 326b extending in an occlusal direction from the occlusal portion 328.

With continued reference to Fig. 7, in one embodiment, the gingival portion 330 of the bracket body 302 includes mesial and distal support pillars 334, 336 defining a gingival surface of the archwire slot 304. Mesial pillar 334 defines a mesial translation surface 340 along the labial side 310 of the bracket body 302. The distal pillar 336 likewise includes a distal translation surface 342 along the labial side 310. Translation surfaces 340, 342 define a slide plane 344 generally forming a labially-facing surface of the gingival portion 330. The slide 306 is supported on the pillars 334 and 336 in the opened and closed positions and translates between the opened and closed positions along the slide plane 344. Pillars 334, 336 are separated by a channel 338 in which a portion of the ligating slide 306, described below, resides and translates during movement between the opened position and the closed position. As shown, in one embodiment, each of the pillars 334, 336 includes a bore 348, 350, respectively, which receives respective ends of the pin 308. It will be appreciated that the bores 348, 350 while shown as through-bores, may extend through only one of the pillars 334 or 336 or extend only partially through one or both pillars 334, 336. The gingival portion 314 may further include a pair of gingival tie wings 324a, 324b extending in a gingival direction.

With reference now to Figs. 5 and 8, in one embodiment the ligating slide 306 includes a plate or a planar cover 352 that is cantilevered over the archwire slot 304. In this regard, the slide 306 is captured or secured to the bracket body 302 only by the pin 308. In one embodiment, no portion of the bracket body 302 contacts a labial surface 356 of the slide 306 to resist an upward load from an archwire in the slot 304 pulling on the slide 306.

Furthermore, as shown in Fig. 5, the cover 352 forms the labial surface of the bracket 300 along the gingival portion 330. The cover 352 includes an archwire slot covering portion 354 that extends over the archwire slot 304 when the slide 306 is in the closed position. As shown in Figs. 5 and 8, the covering portion 354 is relatively thin. By way of example, the through-thickness dimension is from about 0,0762mm to 0,2286 mm (0.003 inch to about 0.009 inch) and, may be from about 0,152mm to 0,203 mm (0.006 inch to about 0.008 inch) and, more particularly about 0,1778 mm (0.007 inc). However, even in view of the minimal thickness, the cover 352 is rigid or stiff.

In this regard and in one embodiment of the invention, the ledge 332 is about 0.007 inch deep and at maximum deflection and under a reasonable load, such as, about 300 MPa, the cover 352 does not clear the ledge 332. In other words, the cover portion 354 does not deflect by more than its thickness, which may measure, for example, about 0,1778 mm (0.007 inch) thick. The rigidity of the cover 352 may be contrasted with relatively thin U-shaped clips which are generally very flexible and often require structural support from the bracket body in order to prevent the clip from overflexing and releasing an archwire from the archwire slot. Typically, clips and the like may be formed of a nickel-titanium alloy material (e.g. Nitinol) which can endure great strain (i.e., they exhibit great elasticity) without plastic deformation. The covering portion 354 is unlike flexible clips in that regard.

The archwire slot covering portion 354 defines a leading edge 357 that is received in the ledge 332. In one embodiment, the archwire slot cover portion 354 extends the full width of the archwire slot 304. That is, the archwire slot cover portion 354 extends from the mesial side 316 to the distal side 318 of the bracket body 302. Advantageously, the slide 306 allows improved rotational control due to the increased length over which the archwire (not shown) is captured within the bracket 300. In one embodiment, in which the mesial-distal width of the cover portion 354 over the archwire slot 304 is about 2,54 mm (0.100 inch), the aspect ratio of the width to the thickness of the cover portion 354, as set out above, may range from about 20 to about 11. It will be appreciated that other aspect ratios may be larger or smaller and will depend primarily on the mesial-distal width of the cover portion 354 when the thickness of the cover portion 354 is about 0,1778 mm (0.007 inch), for example.

With continued reference to Fig. 8, the cover 352 further includes a bracket engaging portion 360. The bracket engaging portion 360 includes mesial and distal portions 362, 364. The portions 362, 364 cover the corresponding pillars 334, 336, shown in Fig. 7. In one embodiment, the portions 362, 364 are the same thickness as the thickness of the cover portion 354 and provide the plate-like appearance of the labial surface of the cover 352.

In addition, in one embodiment, mesial and distal portions 362, 364 define corresponding peripheral edges 366, 368 that are sized and shaped to match the mesial and distal sides of the pillars 334, 336. By way of example, the peripheral edges 366, 368 are coincident with the peripheral edges of each of the mesial and distal pillars 334, 336 when the slide 306 is in the closed position. This configuration is shown best in Fig. 5. As shown, the slide 306 forms a large portion of the exposed labial surface. In one embodiment, no other features of the bracket body 302 extend labially beyond the slide 306. It will be appreciated that the planar or smooth labial surface of the slide 306 is advantageous, because it is less likely to irritate the patient's cheek. Similarly, in a lingual application, the planar or smooth labial surface of the slide 306 is less likely to irritate the patient's tongue.

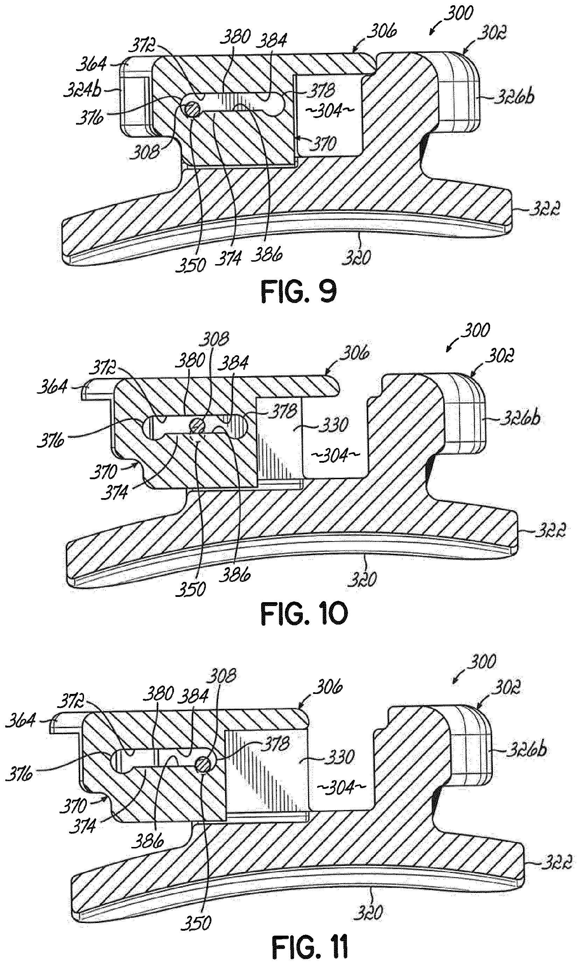

As is shown in Fig. 8, the slide 306 includes a guide fin 370 that extends generally in the lingual direction from the cover 352. The guide fin 370 slides within the channel 338 during opening and closing of the slide 306. The overall height of the guide fin 370 is slightly less than the depth of the channel 338 (shown in Fig. 9). It will be appreciated that the relative dimensions between the fin 370 and the channel 338 ensure surface-to-surface contact between the portions 362, 364 and the surfaces 340, 342. In one embodiment, the guide fin 370 forms a portion of the archwire slot 304 (shown in Fig. 9).

With reference to Fig. 8, the guide fin 370 includes an aperture 372 that aligns with the bores 348, 350 (Fig. 7) such that the pin 308 may cooperate with each of the bores 348, 350 and the aperture 372. As shown, the aperture 372 may generally be an elongated elliptical through-hole. A raised boss 374 projects from the lingual-most surface of the aperture 372 and interacts with the pin 308 during the opening and closing of the slide 306, as set forth below.

With reference now to Figs. 9-11, the operation of the bracket 300 is further described. In one embodiment, the aperture 372 is configured to slidably engage the pin 308 to bias the slide 306 in a direction perpendicular to the slide translational movement. In particular, when the slide 306 is in the closed position, as is shown in Fig. 9, the aperture 372 in conjunction with the pin 308 produces a net force on the slide 306 in the lingual direction or perpendicular to a plane parallel to the base surface 373 of the archwire slot 304. Though not shown, the pin 308 is slightly deformed between the aperture 372 and each of the bores 348, 350. That is, the pin 308 does not pass straight through the aperture 372 and through bores 348, 350. The aperture 372 is offset slightly in the labial direction from the bores 348, 350 to bend the central portion of the pin 308 in the labial direction. The bent pin produces a net force on the slide 306 in the lingual direction. The net force is thus perpendicular to the movement of the slide 306 to the closed position. The net force maintains the slide 306 in a fixed, more stable position relative to the bracket body 302 thereby maintaining a more consistent labial-lingual archwire slot dimension. In other words, stack up tolerances in the labial-lingual direction are reduced or eliminated.

As shown in Fig. 9, the aperture 372 may include a first lobe portion 376 proximate the gingival side 314. By way of example only, the first lobe portion 376 may define a generally circular perimeter along a portion of the aperture 372. The lobe portion 376 may be defined by an axis and a radius. The aperture 372 may further include a second lobe portion 378 proximate the archwire slot 304. Similar to the first lobe portion 374, the second lobe portion 378 may be defined by a generally circular perimeter having an axis and a radius. In one embodiment, the first lobe portion 376 and the second lobe portion 378 may be approximately equal in size. It will be appreciated, however, that embodiments of the present invention are not limited to equivalent sizes of lobe portions 376 and 378.

In one embodiment, the aperture 372 may include a central portion 380 positioned between and connecting the first lobe portion 376 and the second lobe portion 378. The central portion 380 may include a first segment 384 that is tangent to the first lobe portion 374 and that is also tangent to the second lobe portion 378. The central portion 380 may also include a second segment 386 defined by the raised boss 374. The first lobe portion 376, the second lobe portion 378 and the second segment 386 may generally define a slide track for the pin 308.

When the ligating slide 306 is in the closed position, as is shown in Fig. 9, the pin 308 resides in the first lobe portion 376. Forces acting on the slide 306 to force it in the direction toward the opened position must first overcome the additional force required due to the interference to sliding motion presented by the raised boss 374. In operation, a force on the ligating slide 306 must be sufficient to cause the pin 308 to further deform in an amount sufficient to allow the pin 308 to slide up to the second segment 386. This is shown best in Fig. 10. Thus, when the pin 308 slides along the raised boss 374, the pin 308 is deformed to a greater degree than when the pin 308 is in the first lobe portion 376.

Upon further movement of the slide 306 toward the opened position, as shown in Fig. 11, the pin 308 enters the second lobe portion 378. The slide 306 will remain in the opened position until a force sufficient to deform the pin 308 in the reverse direction onto the raised boss 374 is applied to the slide 306. When the pin 308 resides in the lobe portion 378, it may be deformed to a lesser extent than when positioned on the raised boss 374. The degree or amount of deformation of the pin 308 may be the same as the degree or amount of deformation of the pin 308 when it is in the first lobe portion 376. However, embodiments of the present invention are not limited to the degree or amount of deformation being the same in each position. It will be appreciated that the amount of deformation of the pin 308 in any of the first lobe portion 376, the second lobe portion 378, and the central portion 380 may be adjusted by altering the offset distance between one or both bores 348, 350 and the respective surface.

In one embodiment, the overall volume of the bracket body 302, including the pad 322; gingival tie wings 324a, 324b; and/or occlusal tie wings 326a, 326b, if any, may be reduced relative to a similarly configured stainless steel bracket body. Furthermore, the overall volume of the slide 306 may be similarly reduced relative to a similarly configured stainless steel slide though the orthodontic bracket 300 may maintain or improve treatment. The smaller volume of the orthodontic bracket 300 may facilitate greater acceptance of metallic appliances in orthodontic treatment generally.

In one embodiment, the reduced volume may include a reduction in the overall height, the overall width, and/or the length dimension of the bracket body 300 and/or the slide 306. In one embodiment, the overall height, as is generally measured from the labial side 310 to the lingual side 320 at the center of the base surface 373 of the archwire slot 304, may be at least about 10% less and may be from about 10% to about 80% less than a comparable body made of stainless steel and may be from about 25% to about 80% less than a comparable body made of ceramic or plastic.

By way of example, the overall height of the bracket 300 may measure less than 1,905 mm (0.075 inch), and by way of further example, the overall height may measure from about 1,016 mm to 1,524 mm (0.040 inch to about 0.060 inch). This may produce a low-profile bracket in which the overall height is only slightly greater than the labial-lingual archwire slot dimension as measured perpendicular to the base surface 373 from the base surface 373 to the lingual surface of the slide 306 when the slide 306 is in the closed position. A ratio of the overall height to a standard archwire slot dimension of 0,7112 mm (0.028 inch) may be less than about 2.68 or less than about 2. Alternatively, the ratio may range from about 1.43 to about 2.14. It will be appreciated, however, that the "in/out" of the bracket of a particular patient may affect this ratio somewhat. A usable stainless steel bracket may have an overall height to archwire slot dimension ratio of greater than 3 and a usable ceramic bracket may have a ratio greater than 4.

Similarly, the length dimension of the bracket body 302, which is measured generally from the occlusal side 312 to the gingival side 314 may be similarly less than a comparable body made of stainless steel. For example, the length dimension may be at least about 10% less and may be from about 10% to about 80% less. The overall width, which is measured generally from the mesial side 316 to the distal side 318, may be similarly smaller. It will be appreciated that the performance of the orthodontic bracket 300 may be the same or improved over comparatively larger stainless steel and titanium brackets.

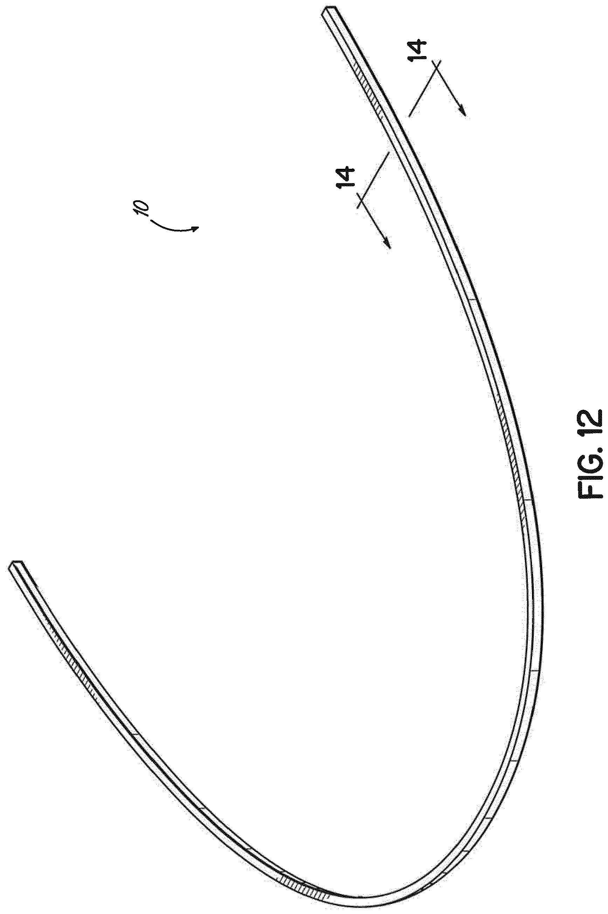

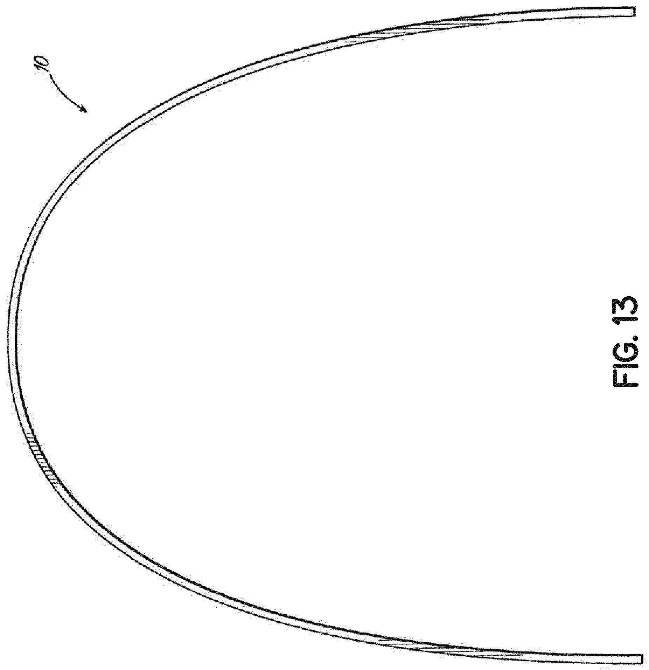

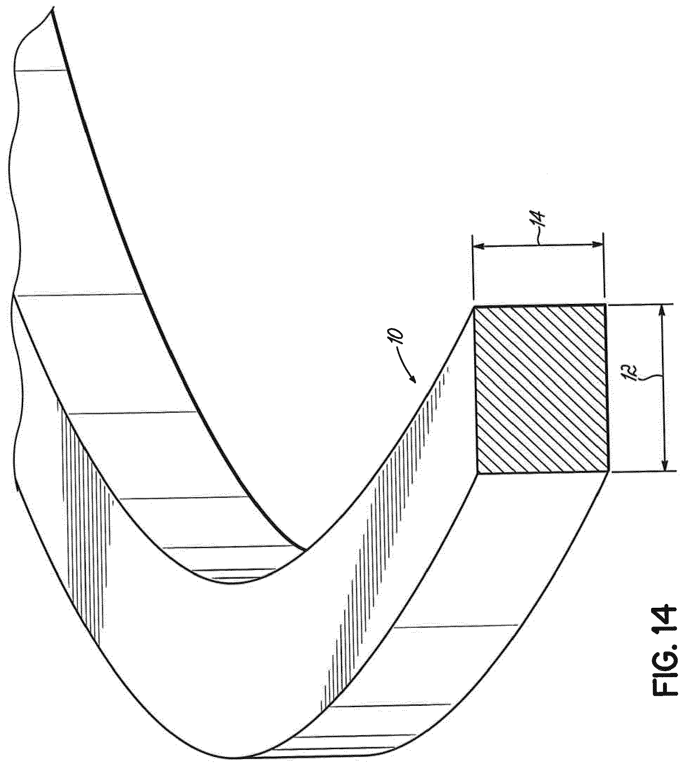

In another embodiment, and with reference to Figs. 12, 13, and 14, the orthodontic apparatus is an orthodontic archwire 10 made of a metallic glass. The archwire 10 may, for example, have a rectangular cross-sectional shape (Fig. 14) or a circular cross-sectional shape (not shown) though it will be appreciated that other cross-sectional configurations are possible. With regard to the archwire 10, embodiments of the present invention contemplate the reduction in cross-sectional dimensions of the archwire 10. For example, and with reference to Fig. 14, the archwire 10 may have one or more dimensions less than a stainless steel archwire of comparable tensile strength. Similarly, the archwire 10 may have one or more dimensions (e.g., width 12 and height 14) that are less than a titanium-containing archwire of comparable tensile strength. The archwire 10 may be harder and thus less likely to bind or notch when in contact with an orthodontic bracket. In one embodiment, the cross-sectional area of the archwire 10 is at least 10% less than a cross-sectional area of a stainless steel archwire having similar mechanical properties. By way of further example, the cross-sectional area of the archwire 10 may be from about 10% to about 80% smaller than the comparable archwire of stainless steel. Thus, the archwire made of metallic glass may have one or more dimensions of about 0,0762 mm to 0,3302 mm (0.003 inch to about 0.013 inch). In one embodiment, the archwire made of metallic glass may have dimensions of about 0,356 mm by 0,635mm (0.014 inch by about 0.025 inch) to about 0,482 mm by 0,635 mm (0.019 inch by about 0.025 inch), though smaller dimensions may be possible.

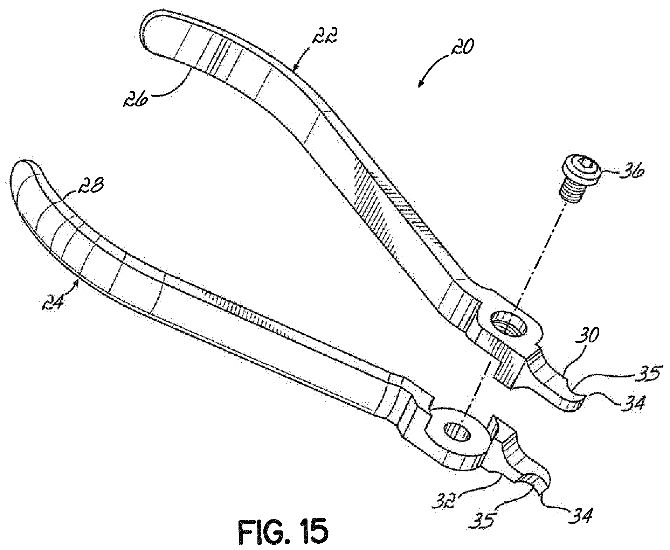

Embodiments of the invention may include orthodontic tools, such as, but not limited to, orthodontic pliers. An exemplary pair of orthodontic pliers 20 is shown in Fig. 15. The pliers 20 are generally shaped to have two corresponding halves 22 and 24. Each half 22 and 24 includes a corresponding handle portion 26 and 28, respectively, at one end thereof that, when assembled as described below, are configured to be held and operated by a human hand. At the other end of each respective half 22 and 24, there is a corresponding tip portion 30 and 32. Further, each tip portion 30 and 32 includes at least one gripping tooth 34. Collectively, tip portions 30 and 32 generally define a working surface 35 of the pliers 20.

The halves 22 and 24 are operably joined together at a hinge 36, such as, with a screw, as shown, so as to orient the gripping tooth 34 of the half 22 opposite the gripping tooth 34 of half 24. Operation of the halves 22 and 24 relative to one another produces relative movement between opposing gripping teeth 34. In this manner, operation of the handle portions 26 and 28 may move the gripping teeth 34 to a closed position where there may be little, if any, clearance between the opposing gripping teeth 34. Relative movement of the handle portions 26 and 28 in the opposite direction may move the tip portions 30, 32 to a fully opened position. It will be appreciated that in the opened position, an orthodontic bracket (not shown) or the like may be positioned in the space separating the tip portion 30 from the tip portion 32. Closing the tip portions 30, 32 will cause the working surface 35 to engage or contact the orthodontic bracket or the like situated in the space separating the tip portions 30, 32. Additional pressure applied to the handle portions 26 and 28 may generate a gripping force on the orthodontic bracket that may easily exceed a force capable of being applied with fingers alone. The application of force via the pliers 20 may facilitate work on or to the orthodontic bracket, such as, removing the orthodontic bracket from a tooth, that ordinarily may not be possible in the absence of the pliers 20.

According to embodiments of the invention, each gripping tooth 34 or any portion or the entirety of the pliers 20 may be made of a metallic glass, as set forth above. Such pliers 20 may advantageously reduce hand fatigue often experienced by clinicians during orthodontic treatment because of the relative reduction in the weight of the pliers 20. However, the same or improved performance may be observed. In addition, the pliers 20 according to embodiments of the invention may exhibit improved durability and toughness and thus resist scratching and generally last longer than comparable pliers of stainless steel.

In one embodiment, the pliers 20 may be made by heating a bulk chunk of metallic glass to an elevated temperature and then plastically deforming the chunk into one of the halves 22, 24, as set forth above. Once each half 22, 24 has been thus formed, the two halves 22, 24 may be assembled by attachment with a screw so as to form the hinge 36, as shown in Fig. 15. It will be appreciated that the process disclosed may not require any subsequent machining (e.g., grinding) or finishing operations (e.g., polishing or sanding) that may otherwise have been necessary to achieve the tolerances required to provide a smooth and tight relative motion between the halves 22 and 24. Thus, one embodiment of the method of making the pliers 20, as disclosed herein, advantageously avoids the costs associated with those additional processes. In addition, embodiments may also eliminate any shrinkage typically associated with a sintering operation, such as that required during the manufacturing of metal-injection-molding operations, as is set forth above. It will be appreciated that the halves 22 and 24 may each exhibit improved biocompatibility and/or corrosion resistance.

While the present invention has been illustrated by a description of various embodiments and while these embodiments have been described in some detail, the scope of the invention is defined by the appended claims.

## Claims

1. An orthodontic appliance for use in orthodontic treatment selected from the group consisting of an orthodontic bracket (110, 200, 300), an orthodontic archwire (10), an orthodontic tool (20), and a discrete component (22, 24, 36, 112, 114, 116, 302, 306, 308) thereof, the orthodontic appliance being made of a metallic glass, **characterized in that** the metallic glass is a nickel based alloy metallic glass.

2. The orthodontic appliance of claim 1 wherein the orthodontic appliance is an orthodontic bracket for coupling an archwire with a tooth, the orthodontic bracket (110, 200, 300)comprising:
a bracket body (112, 202, 302) including an archwire slot (118, 204, 304), the bracket body (112, 202, 302) being made of a metallic glass;
a movable member (114, 306) made of a metallic glass and operatively coupled to the bracket body (112, 202, 302) and movable between an opened position in which the archwire (10) is insertable into the archwire slot (118, 204, 304) and a closed position in which the movable member (114, 306) retains the archwire (10) in the archwire slot (118, 204, 304); and
a pin (116, 308) coupling the movable member (114, 306) to the bracket body (112, 202, 302).

3. The orthodontic appliance of claim 2 wherein the movable member is a ligating slide (306) having a plate-like configuration including an archwire slot covering portion (354) extending over the archwire slot (304) when the ligating slide is in the closed position, the archwire slot covering portion (354) having a thickness in the range of from 0,0762 nm to 0,2286 mm (0.003 inch to 0.009 inch).

4. The orthodontic appliance of claim 3 wherein the covering portion (354) has a width as measured from a mesial side to the distal side of the covering portion (354) and the aspect ratio of the width of the covering portion (354) to the thickness of the covering portion is from about 11 to 22.

5. The orthodontic appliance of any one of claims 2 to 4 wherein the movable member is a ligating slide (306) having a plate-like configuration including an archwire slot covering portion (354) extending over the archwire slot (304) when the ligating slide (306) is in the closed position, the archwire slot (304) has a lingual-labial dimension and the bracket (300) has an overall height, wherein the ratio of the overall height to the labial-lingual dimension is less than about 2.68.

6. The orthodontic appliance of claim 5 wherein the ratio of the overall height to the labial-lingual dimension is less than about 2.

7. The orthodontic appliance of claim 5 wherein the ratio of the overall height to the labial-lingual dimension is from about 1.43 to about 2.14.

## Patentansprüche

1. Orthodontische Apparatur zur Verwendung in einer orthodontischen Behandlung, die aus der Gruppe bestehend aus einem orthodontischen Bracket (110, 200, 300), einem orthodontischen Bogendraht (10), einem orthodontischen Instrument (20) und einer diskreten Komponente (22, 24, 36, 112, 114, 116, 302, 306, 308) davon ausgewählt ist, wobei die orthodontische Apparatur aus einem metallischen Glas hergestellt ist, **dadurch gekennzeichnet, dass** das metallische Glas ein metallisches Glas aus einer Legierung auf Nickelbasis ist.

2. Orthodontische Apparatur nach Anspruch 1, wobei die orthodontische Apparatur ein orthodontisches Bracket zum Verbinden eines Bogendrahts mit einem Zahn ist, wobei das orthodontische Bracket (110, 200, 300) Folgendes aufweist:
einen Bracketkörper (112, 202, 302) mit einem Bogendrahtspalt (118, 204, 304), wobei der Bracketkörper (112, 202, 302) aus einem metallischen Glas hergestellt ist;
ein bewegbares Element (114, 306), das aus einem metallischen Glas hergestellt ist und funktionell mit dem Bracketkörper (112, 202, 302) verbunden ist und zwischen einer geöffneten Stellung, in der der Bogendraht (10) in den Bogendrahtspalt (118, 204, 304) einsetzbar ist, und einer geschlossenen Stellung, in der das bewegbare Element (114, 306) den Bogendraht (10) im Bogendrahtspalt (118, 204, 304) festhält, bewegbar ist; und
einem Stift (116, 308), der das bewegbare Element (114, 306) mit dem Bracketkörper (112, 202, 302) verbindet.

3. Orthodontische Apparatur nach Anspruch 2, wobei das bewegbare Element ein ligierendes Gleitstück (306) mit einer plattenähnlichen Gestalt ist, das einen den Bogendrahtspalt abdeckenden Teil (354) enthält, der sich über den Bogendrahtspalt (304) erstreckt, wenn das ligierende Gleitstück in der geschlossenen Stellung ist, wobei der den Bogendrahtspalt abdeckende Teil (354) eine Dicke im Bereich von 0,0762 mm bis 0,2286 mm (0,003 Zoll bis 0,009 Zoll) hat.

4. Orthodontische Apparatur nach Anspruch 3, wobei der abdeckende Teil (354) eine von einer mesialen Seite zur distalen Seite des abdeckenden Teils (354) gemessene Breite hat und das Seitenverhältnis der Breite des abdeckenden Teils (354) zur Dicke des abdeckenden Teils von etwa 11 bis 22 ist.

5. Orthodontische Apparatur nach einem der Ansprüche 2 bis 4, wobei das bewegbare Element ein ligierendes Gleitstück (306) mit einer plattenähnlichen Gestalt ist, das einen den Bogendrahtspalt abdeckenden Teil (354) enthält, der sich über den Bogendrahtspalt (304) erstreckt, wenn das ligierende Gleitstück (306) in der geschlossenen Stellung ist, der Bogendrahtspalt (304) eine Lingual-Labial-Dimension hat und das Bracket (300) eine Gesamthöhe hat, wobei das Verhältnis der Gesamthöhe zur Labial-Lingual-Dimension kleiner als etwa 2,68 ist.

6. Orthodontische Apparatur nach Anspruch 5, wobei das Verhältnis der Gesamthöhe zur Labial-Lingual-Dimension kleiner als etwa 2 ist.

7. Orthodontische Apparatur nach Anspruch 5, wobei das Verhältnis der Gesamthöhe zur Labial-Lingual-Dimension von etwa 1,43 bis etwa 2,14 ist.

## Revendications

1. Appareil orthodontique à utiliser dans un traitement orthodontique sélectionné parmi le groupe consistant en une armature orthodontique (110, 200, 300), un fil métallique de voûte orthodontique (10), un outil orthodontique (20) et un composant discret (22, 24, 36,112, 114, 116, 302, 306, 308) de celui-ci, l'appareil orthodontique étant fabriqué en un verre métallique, **caractérisé en ce que** le verre métallique est un verre métallique en alliage à base de nickel.

2. Appareil orthodontique selon la revendication 1, où l'appareil orthodontique est une armature orthodontique permettant de coupler un fil métallique de voûte à une dent, l'armature orthodontique (110, 200, 300) comprenant :
un corps d'armature (112, 202, 302) incluant une fente pour fil métallique de voûte (118, 204, 304), le corps d'armature (112, 202, 302) étant fabriqué en un verre métallique ;
un membre amovible (114, 306) fabriqué en un verre métallique et couplé de manière opérationnelle au corps d'armature (112, 202, 302) et amovible entre une position ouverte dans laquelle le fil métallique de voûte (10) peut être inséré dans la fente pour fil métallique de voûte (118, 204, 304) et une position fermée dans laquelle le membre amovible (114, 306) retient le fil métallique de voûte (10) dans la fente pour fil métallique de voûte (118, 204, 304) ; et
une goupille (116, 308) couplant le membre amovible (114, 306) au corps d'armature (112, 202, 302).

3. Appareil orthodontique selon la revendication 2, dans lequel le membre amovible est un coulisseau de ligature (306) ayant une configuration en plate-forme incluant une partie de recouvrement (354) de la fente pour fil métallique de voûte s'étendant sur la fente pour fil métallique de voûte (304) lorsque le coulisseau de ligature est dans la position fermée, la partie de recouvrement (354) de la fente pour fil métallique de voûte ayant une épaisseur dans la plage de 0,0762 mm à 0,2286 mm (0,003 pouce à 0,009 pouce).

4. Appareil orthodontique selon la revendication 3, dans lequel la partie de recouvrement (354) a une largeur telle que mesurée d'un coté mésial au côté distal de la partie de recouvrement (354) et un rapport de côtés de la largeur de la partie de recouvrement (354) à l'épaisseur de la partie de recouvrement est d'environ 11 à 22.

5. Appareil orthodontique selon l'une quelconque des revendications 2 à 4, dans lequel le membre amovible est un coulisseau de ligature (306) ayant une configuration en plate-forme incluant une partie de recouvrement (354) de fente pour fil métallique de voûte s'étendant sur la fente pour fil métallique de voûte (304) lorsque le coulisseau de ligature (306) est dans la position fermée, la fente pour fil métallique de voûte (304) a une dimension linguale-labiale et l'armature (300) a une hauteur totale, dans lequel le rapport de la hauteur totale à la dimension linguale-labiale est moins qu'environ 2,68.

6. Appareil orthodontique selon la revendication 5, dans lequel le rapport de la hauteur totale à la dimension linguale-labiale est moins qu'environ 2.

7. Appareil orthodontique selon la revendication 5, dans lequel le rapport de la hauteur totale à la dimension linguale-labiale est d'environ 1,43 à environ 2,14.
